# EUROPEAN PATENT APPLICATION

(11) **EP 2 056 523 A1**
(43) Date of publication of application: **06.05.2009**
(21) Application number: 07720406.3
(22) Date of filing: 14.03.2007
(51) Int. Cl.: H04L 12/24, G06F 21/00, H04L 29/06, G06Q 30/00

(54) **METHOD AND SYSTEM FOR BACKING UP AND RECOVERING LICENSE**

(30) Priority: 18.08.2006 CN 200610111440
(71) Applicant: Huawei Technologies Co., Ltd., Shenzhen, Guangdong Province 518129 (CN)
(72) Inventor: FENG, Wenjie, Guangdong Province 518129 (CN); LI, Yimin, Shenzhen, Guangdong Province 518129 (CN); DANG, Pei, Shenzhen, Guangdong Province 518129 (CN); ZHANG, Renzhou, Guangdong Province 518129 (CN); ZHOU, Haojun, Guangdong Province 518129 (CN); ZHOU, Chen, Guangdong Province 518129 (CN); ZHOU, Zhipeng, Guangdong Province 518129 (CN)
(74) Representative: Pfenning, Meinig & Partner GbR
(86) International application number: PCT/CN2007/000824
(87) International publication number: WO 2008/022510

(57) **Abstract**

A method for backing up and recovering a license to solve the problem in the prior art that an original license is sent to a user when the license is recovered by a server which results in a right extension includes: backing up the license information of the first device in the server, and associating the license information of the first device with a user identifier, and the license information indicating the usage status of the license when the first device is reported recently; requesting the license recovered from the second device to the server; validating the user identifier of the second device with that associated with the license information, and sending the license created according to the backed up license information when the two identifiers are insured to be consistent with each other.

## Description

### Field of the Invention

The present invention relates to the field of digital rights management technologies, and in particular, to a method and system for backing up and restoring a license.

### Background of the Invention

The Digital Rights Management (DRM) controls the use of digital contents primarily through rights constraint and content protection scheme, and thereby protects legal rights of content owners. A Content Issuer (CI) encrypts digital contents, and a user downloads data packets of the encrypted digital contents onto his terminal device. A Rights Issuer (RI) is responsible for distributing a license corresponding to digital contents, which includes corresponding rights and a content key for decryption of the digital contents. The terminal device can make a normal use of purchased digital contents only if it has both content data packets (containing information necessary for decryption of the digital contents) and a license. A DRM Agent uses a public key of the terminal device to obtain a license key, and in turn obtains a content key in the license through the license key to decrypt the digital contents, and controls consumption of the digital contents by the user according to rights specified in the license.

A license may be a stateful license or a stateless license according to constraints contained in the license. The stateful license refers to a license which includes constraints such as count, time (including time period, accumulated time), etc. and the stateless license refers to a license which includes no status constraints under any permission in the license.

In a DRM system, a license can be bound to a terminal device or to a user. Typically, the binding of the license to the terminal device is achieved by encrypting a content key in a license with the public key of the terminal device. The binding of the license to the user is achieved by adding an individual constraint into rights, and in such a situation, the public key of the terminal device is still used to encrypt the content key in the license in order to ensure safety of the system. A specific example will be given below in which an individual constraint is added into the rights to achieve binding of the license to the user:

```
     <permission>
          <play>
               <constraint>
                    <individual>
                         <context>
                             <uid> IMSI:0123456789</uid>
                         </context>
                    </individual>
               </constraint>
          </play>
     </permission>
```

As disclosed in the US patent application US2006/0031164 A1, when a first terminal device transfers a license to a second terminal device (the two terminal devices may have no relationship). The first device is required to transmit a license and the address of the second device to the Rights Issuer (RI), and the RI forwards the license to the second device according to the address. However, the transferring here is not equivalent to backing up since when a license is to be transferred in the OMA, corresponding rights has to be obtained firstly, while the backing up does not require any extra rights. Further, in the case of the transferring, the first device has to know the address of the second device prior to the transferring, but it is impossible to obtain the address of the second device prior to the transferring in many situations. For instance, when a user wishes to transfer a license in an old mobile phone held by him, which is bound to a SIM card, to a new mobile phone to be purchased, if the new mobile phone has not been purchased, the user has no knowledge of the address of the new mobile phone when requesting to make a backup.

In OMA 2.0, a license is on a terminal device can be backed up to another terminal device, but the license backed up can only be restored onto the original device. Such a process can not offer both backing up and restoring of a license in the case that a user has no extra terminal device.

OMA 2.0 also mentions backing up of a license at a server end. That is, the server end stores license information requested by each user (including original rights information, etc.), and transmits a stored original license to the user when the user requests to restore a license due to a damage to or a replacement of his terminal device.

In the above solution, only the original rights information of the user can be restored, and remaining rights information of the user can not be restored exactly. Since part of rights in the license may have been consumed during the time period from the user acquiring the license till requesting restoration, proliferation of rights will occur if the original license is restored for the user.

### Summary of the Invention

Embodiments of the present invention provide a method and system for backing up and restoring a license, which can address the problem in the prior art that the proliferation of rights will occur because an original license is transmitted to a user when a server restores the license.

A method for backing up and restoring a license includes the steps of:
backing up, at a server, license information of a first device, and associating the license information with a user identifier, the license information reflecting the current state information of the license when the first device reports the license information the last time;
a second device requests the server to restore a license;
validating, by the server, a user identifier of the second device and the user identifier associated with the license information, and upon determination that the two user identifiers are consistent, generating the license based on the license information backed up, and transmitting the license to the second device.

A terminal device includes:
a module adapted to acquire license information;
a module adapted to read a user identifier;
a module adapted to transmit the license information to a server, to request the server to restore a license, and to acquire the license from the server;
a module adapted to sign and to validate a signature during a communication.

A server includes:
a module adapted to backup license information and to associate the license information with a user identifier;
a module adapted to validate whether the user identifier of a requestor requesting to restore a license is consistent with the user identifier associated with the license information;
a module adapted to generate the license according to the license information backed up upon validation that the user identifiers are consistent;
a module adapted to transmit the license to the requestor;
a module adapted to sign and to validate a signature during a communication.

A license processing system includes a first device, a second device, and a server, wherein:
the first device is adapted to transmit license information to the server;
the second device is adapted to acquire a license backed up from the server;
the server is adapted to backup the license information of the first device, and to associate the license information with a user identifier, the license information reflecting the current state information of the license when the first device recently reports the license information; and is adapted to, upon validation that the user identifier of the second device is consistent with the user identifier associated with the license information, generate the license according to the license information backed up, and transmit the license to the second device.

According to the embodiments of the invention, the server makes a backup of a license and restores the license, and the devices carry user identifiers when a license is backed up and restored, so that in the case that a user has no additional permissions such as Move, Copy, etc. the user can back up license information from one device to the server, and can restore a corresponding license on another device. During backing up and restoration of the license, the terminal device requesting backup or the server updates the state information of the license to be backed up, thus the proliferation of rights after restoring the license is avoided.

### Brief Descriptions of the Drawings

Figure 1 is a schematic structural diagram of a license backup system according to an embodiment of the invention;
Figure 2 is a flow chart of a process in which a first device disable the local license or deletes the local license after the license is backed up according to an embodiment of the invention;
Figure 3 is a flow chart of a process in which a first device disables the local license before the license is backed up according to an embodiment of the invention;
Figure 4 is a flow chart of a process in which a server initiatively triggers restoration of a license according to an embodiment of the invention;
Figure 5 is a flow chart of a process in which a server initiatively triggers acquisition of a license according to an embodiment of the invention.

### Detailed Descriptions of the Embodiments

Embodiments of the present invention are provided to solve the problem of rights proliferation in the prior art which is caused in the case that a server restores an original license to a user. According to an embodiment of the invention, a server backs up license information of a first device, and associates the license information backed up with a user identifier in which the license information reflects the current state information of a license when the first device reports the license information the last time; after successfully validating the identity of a user associated with a second device requesting to restore the license, the server generates a license based on the license information backed up, and transmits the license to the second device.

The user identifier is used for uniquely identifying the identity of a user. When a license is backed up or restored between a server and multiple terminal devices of a user, the multiple terminal devices carry the same user identifier. The user identifier can be transferred from one terminal device of the user to another. When the user identifier is located at a specific terminal device, the terminal device performs a corresponding operation with the user identifier. The user identifier may be of various types, such as a SIM card, a Smartcard, etc, or a username with a password.

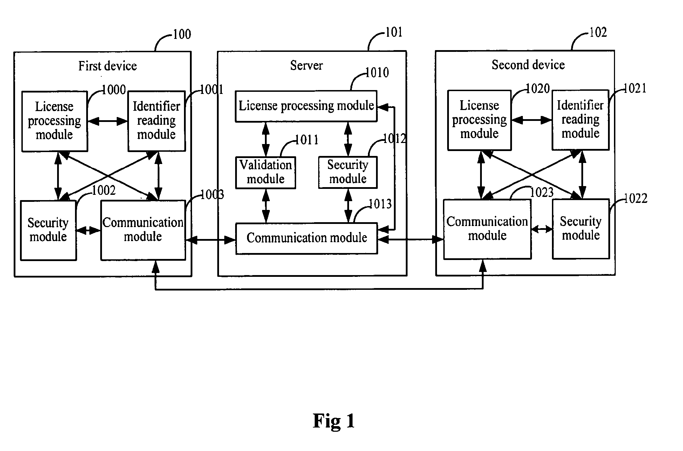

Figure 1 illustrates a license backup system according to an embodiment of the invention. The license backup system primarily includes a first device 100, a server 101, and a second device 102. The first device 100 is used for transmitting license information to the server 101. The server 101 is used for backing up the license information of the first device 100, acquiring the user identifier of the first device 100, and associating the license information with the user identifier, in which the license information reflects the current state information when the first device 100 reports the license information the last time and is used for generating a license based on the license information backed up and restoring the license to the second device 102 when it is determined that the user identifier of the second device 102 is consistent with the user identifier associated with the license information. The second device 102 is used for restoring the backed up license from the server.

The first device 100 includes a license processing module 1000, an identifier reading module 1001, a security module 1002, and a communication module 1003. The license processing module 1000 is used for acquiring local license information and transmitting the local license information to the communication module 1003. The identifier reading module 1001 is used for reading a user identifier and transmitting the user identifier to the communication module 1003. The security module 1002 is used for signing a message and validating a signature during an interaction with the server. The communication module 1003 is used for performing a message interaction with the server or other devices.

When the first device 100 requests the server 101 to back up a license, the license processing module 1000 transmits license information which is needed to be backed up to the communication module 1003, and the identifier reading module 1001 transmits the user identifier to the communication module 1003; the communication module 1003 generates a license backup request message, and the security module 1002 signs the license backup request message; and the communication module 1003 transmits the signed license backup request message to the server 101.

The license backup request message includes a device identifier, license information, and a signature for part or all of information in the request message. The device identifier is used for uniquely identifying a terminal device. The license information may include license identifier and current state information, or include a license identifier, original rights information, and current state information.

The license backup request message also includes a device certificate, which is used by the server to validate a device. The server also uses a public key in the device certificate to validate integrity of subsequent messages.

If the server 101 pre-stores original rights information of the license, the license information will not contain the original rights information. A specific example of the license backup request message will be given below:

```
     <Backup request message>
          <Device identifier/>
          <License information>
               < License identifier/>
               < License/>
               ......
         </ License information>
         ......
     </ Backup request message >
```

The first device 100 disables the license backed up or deletes it after receiving a successful backup response message from the server 101 or before initiating a backup request message.

The server 101 includes a license processing module 1010, a validation module 1011, a security module 1012, and a communication module 1013. The license processing module 1010 is used for backing up license information, associating the license information with a user identifier, and generating a license based on the license information backed up when it is validated that the user identifier of the second device 102 requesting to restore a license is consistent with the user identifier associated with the license information; the validation module 1011 is used for validating whether the user identifier of the second device 102 requesting to restore a license is consistent with the user identifier associated with the license information; the security module 1012 is used for signing and validating a signature during a communication; and the communication module 1013 is used for transmitting a license to the second device 102 and performing message interactions with other devices. The function of backing up license information by the license processing module 1010 can also be accomplished by a storage module, and at this time, the license processing module 1010 is mainly used for generating a license.

After receiving a license backup request message from the first device 100, the server 101 returns a license backup response message to the first device through the communication module 1013. After the server 101 receives a license restoration request message from the second device 102, the validation module 1011 validates whether the user identifier carried by the second device 102 is consistent with the user identifier carried by the first device when requesting a backup, and if yes, the server looks up restorable license information according to the user identifier, and returns through the communication module 1013 a successful restoration response message including a list of restorable licenses to the second device; or if not, the server returns a failure restoration response message indicating a restoration failure. After the server 101 receives a license acquisition request message from the second device 102, the license processing module 1010 re-encapsulates a content key in the license based on a public key in the device certificate of the second device 102, and returns an acquisition response message to the second device 102 through the communication module 1013.

The license backup response message includes response status, a server identifier, and a signature on part or all of information in the request message. The response status indicates that the processing status of a license backup request processed by the server 101 is success or failure, and the server identifier is used for uniquely identifying the server.

The backup response message also includes a validity period before which the license backed up can be restored. If the validity period expires, the license backed up can not be restored by the user. The validity period is valid only when the response status is success.

When the response status is success, if the server 101 pre-stores original rights information of a license, the server, after receiving a license backup request message from the first device 100, updates locally-stored state information of the license to be backed up according to current state information contained in the license backup request message, and backs up license information of the first device, and associates the license information with the user identifier. The license information reflects state information of the license when the first device 100 requests to make a backup.

When the response status is success, if the server 101 does not pre-store original rights expression language of a license, the first device 100 updates state information of the license to be backed up with current state information, and transmits the current state information to the server 101. The server 101 backs up license information of the first device, and associates the license information with the user identifier. The license information reflects state information of the license when the first device 100 requests backup.

If the server 101 pre-stores original rights expression language, the first device 100 regularly or irregularly reports to the server 101 state information of the license including a license identifier. The server 101 looks up corresponding license information backed up locally according to the license identifier, and updates state information of the corresponding license backed up locally according to received state information. The sever 101 may set number of times that a license can be restored on undetermined devices, and may delete the corresponding license after the number of times is used up.

The restoration response message includes response status, a license acquisition trigger, and a signature on part or all of information in the request message. The response status indicates that the processing status of a license restoration request processed by the server 101 is success or failure, and the license acquisition trigger includes a list of licenses that are restorable by the second device 102.

The acquisition response message, which is used for returning a license to the second device 102, includes response status, a server identifier, a license, and a signature on part or all of information in the request message. The response status indicates that the processing status of a license acquisition request by the server 101 is success or failure; the server identifier uniquely identifies the server; and the license includes (1) a content key re-encapsulated using a public key of the second device, (2) new license identifier, and (3) updated rights information.

After transmitting the license backed up to the second device 102, the server 101 deletes the license. Preferably, the server 101 is a rights issuer.

The second device 102 includes a license processing module 1020, an identifier reading module 1021, a security module 1022, and a communication module 1023. The license processing module 1020 is used for acquiring a restored license; the identifier reading module 1021 is used for acquiring and transmitting a user identifier to the communication module 1023; the security module 1022 is used for signing a message and validating a signature during an interaction with the server 101; and the communication module 1023 is used for requesting the server 101 to restore a license, receiving a license from the server 101, and transmitting the license to the license processing module 1020 for storage.

When the second device 102 requests the server 101 to restore a license, the identifier reading module 1021 reads the user identifier, and a license restoration request message is transmitted to the server 101 by the communication module 1023. After the second device 102 receives a successful restoration response message from the server 101, the user chooses and restores part or all licenses from a list of restorable licenses, and a license acquisition request message is transmitted to the server 101 by the communication module 1023. After receiving a successful acquisition response message from the server 101, the license processing module 1020 locally stores the restored license(s).

The license restoration request message includes a device identifier and a signature on part or all of information in the request message. The device identifier uniquely identifies a terminal device.

The license restoration request message also includes a device certificate. The server 101 uses the device certificate to validate a device, uses the public key in the device certificate to validate integrity of subsequent messages, and uses the public key to re-encapsulate and convert a license when issuing the license to the second device 102. A specific example of the license restoration request message will be given as follows:

```
     <Restoration request message>
          <Device identifier/>
          <Device certificate>
               ......
          </Device certificate>
          ......
     <Restoration request message>
```

The license acquisition request message includes a device identifier, a license identifier, and a signature on part or all of information in the request message. The device identifier uniquely identifies a terminal device; and the license identifier is used for identifying part or all of licenses chosen to be restored by the second device 102 from a list of the licenses returned from the server 101.

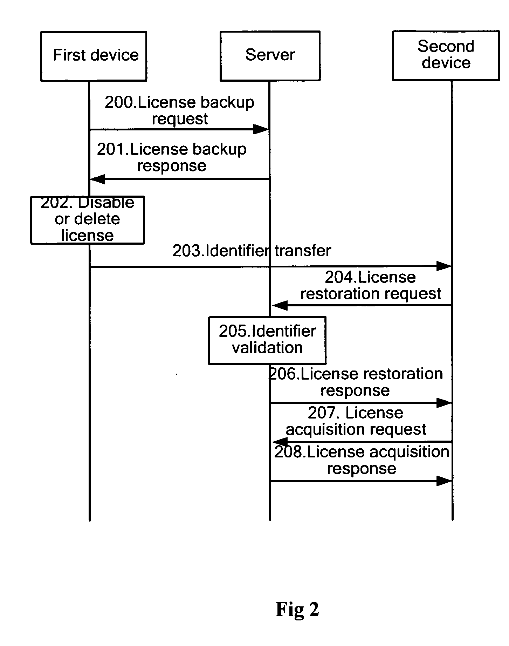

With reference to Figure 2 in which the system structure as illustrated in Figure 1 is taken as an example, a flow of backing up a license by a server is as follows.

In step 200, the first device transmits to the server a license backup request message; the license backup request message includes a device identifier, license information, a signature, and a device certificate.

In step 201, the server returns to the first device a license backup response message; the license backup response message includes response status, a server identifier, and a signature. When the response status is success, the license backup response message also includes a validity period of a license backed up.

In step 202, the first device disables the license backed up locally or deletes the license after receiving a successful backup response message from the server.

In step 203, the user transfers his user identifier from the first device to the second device. For instance, when the user identifier is a SIM card, the user draws out the SIM card from the first device, and inserts it into the second device.

In step 204, the second device sends a license restoration request message to the server; the license restoration request message includes a device identifier, a signature, and a device certificate.

In step 205, the server validates whether a user identifier of the second device is consistent with the user identifier carried by the first device when requesting backup.

In step 206, upon determination that the user identifier of the second device 102 is consistent with the user identifier carried by the first device when requesting backup, the server looks up restorable licenses according to the user identifier, and returns to the second device a successful restoration response message which includes a response status, a license acquisition trigger (including a list of restorable licenses), and a signature.

In step 207, after receiving the successful restoration response message, the second device transmits to the server a license acquisition request message including a device identifier, a license identifier, and a signature.

In step 208, after receiving the license acquisition request message, the server returns to the second device a license acquisition response message including response status, a server identifier, a license (including a content key re-encapsulated using a public key of the second device, new license identifier, and updated rights information), and a signature; the server deletes the license after the license is transmitted.

In the flow as illustrated in Figure 2, if the second device has no user identifier before requesting the server to restore the license, the user transfers his identifier from the first device to the second device. If the second device carries the user identifier before requesting the server to restore the license, step 203 can be omitted.

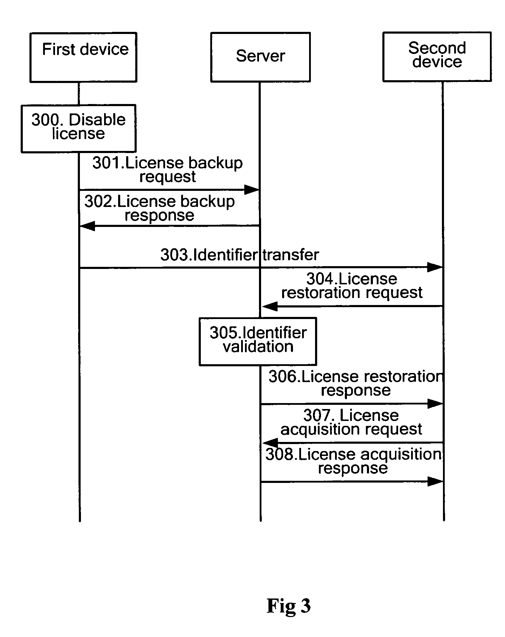

In the flow as illustrated in Figure 2, the first device disables or deletes the corresponding local license after receiving the successful backup response message. It may also be that the first device disables the corresponding local license before transmitting the license backup request message, a processing flow of which is as follows with reference to Figure 3.

In step 300, the first device disables a license to be backed up after receiving an instruction from a user that a license needs to be backed up.

In step 301, the first device transmits to the server a license backup request message; the license backup request message includes a device identifier, license information, a signature, and a device certificate.

In step 302, the server returns to the first device a license backup response message including response status, a server identifier, and a signature. If the response message indicates the backup is successful, the message may also include a validity period of the license backed up, or if the response message indicates the backup is failed, the first device recovers the license as being available.

Steps 303 to 308 are identical to steps 203 to 208, and will not be described again. Alike, step 303 can be omitted.

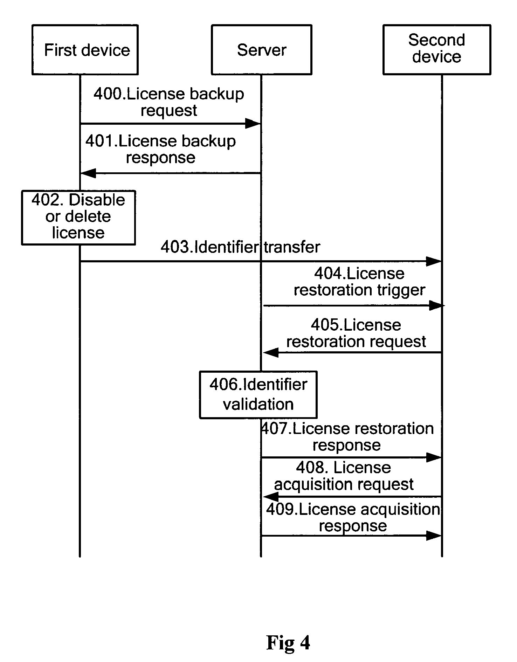

In the flows as illustrated in Figure 2 and Figure 3, the second device initiatively issues a license restoration request. It may also be that the server initiatively triggers a license restoration operation, a processing flow of which is as follows with reference to Figure 4.

In step 400, the first device transmits to the server a license backup request message; the license backup request message includes a device identifier, license information, a signature, and a device certificate.

In step 401, the server returns a license backup response message to the first device; the license backup response message includes response status, a server identifier, a signature, and when the response status is success, the license backup response message also includes a validity period of a license backed up.

In step 402, after receiving a successful backup response message from the server, the first device disables the backed up license locally or deletes the license.

In step 403, a user transfers his user identifier from the first device to the second device. For instance, when the user identifier is a SIM card, the user draws out the SIM card from the first device, and inserts it into the second device.

In step 404, the server transmits a license restoration trigger to the second device.

In step 405, in response to the license restoration trigger from the server, the second device transmits to the server a license restoration request message; the license restoration request message includes a device identifier, a signature, and a device certificate.

Steps 406 to 409 are identical to steps 205 to 208, and will not be described again. Alike, the step 403 can be omitted.

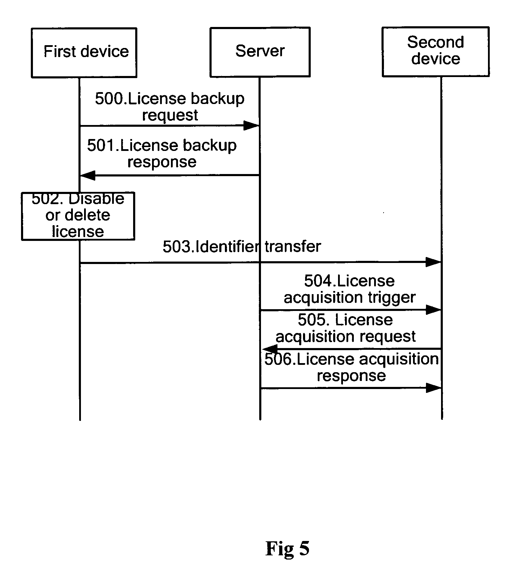

In the flow as illustrated in Figure 4, the license restoration request is transmitted to the server in a form of message. Here, the request can also be transmitted in a form other than message. For instance, it may be that the user fills in an application at a website, and the server triggers directly the second device to acquire a license. A trigger includes a server identifier, a license identifier, and a signature. The processing flow is described as follows with reference to Figure 5.

In step 500, the first device transmits to the server a license backup request message; the license backup request message includes a device identifier, license information and signature, and a device certificate.

In step 501, the server returns a license backup response message to the first device; the license backup response message includes response status, a server identifier, and a signature, and when the response status is success, the license backup response message may also includes a validity period of a license backed up.

In step 502, the first device, after receiving a successful backup response message from the server, disables the license backed up locally or deletes the license.

In step 503, a user transfers his user identifier from the first device to the second device. For instance, when the user identifier is a SIM card, the user draws out the SIM card from the first device, and inserts it into the second device.

In step 504, the server transmits a license acquisition instruction to the second device.

In step 505, in response to the license acquisition instruction from the server, the second device transmits a license acquisition request message to the server; the license acquisition request message includes a device identifier, a license identifier, and a signature.

In step 506, after receiving the license acquisition request message, the server returns a license acquisition response message to the second device; the license acquisition response message includes response status, a server identifier, a license (including a content key re-encapsulated using a public key of the second device, new license identifier, and updated rights expression language), and a signature. The server deletes the license after the license is transmitted.

If the second device carries the user identifier before requesting the server to restore the license, the step 503 can be omitted.

The above first and second devices may be physically different, or be physically the same. When the first and second devices are physically the same, device certificates of the first and second devices are consistent with each other. The above second device is an undetermined device, i.e. the device which will restore the license is not determined.

As can be seen from the above embodiments, the server makes a backup of and restores a license, and a device carries a user identifier when the license is backed up and restored, so that in the case that a user has no extra permissions such as Move and Copy, the user can back up license information on one device onto the server, and can restore a corresponding license on another device. Further, during backup and restoring of a license, the terminal device requesting backup or the server updates state information of the license information to be backed up, thus the proliferation of rights after restoring the license is avoided. Still further, during backup and restoration of a license, the server does not have to pre-store license information purchased by each user, and the license information can be transmitted to the server from a terminal device when the terminal device requests a license backup, thus payload of the server can be reduced effectively.

It is evident that those skilled in the art can make various changes and modifications to the invention without departing from the spirit and scope of the invention. Thus, the invention is intended to cover the changes and modifications provided that these changes and modifications fall within the scope of the appended claims of the invention and equivalents.

## Claims

1. A method for backing up and restoring a license, comprising:
backing up, at a server, license information of a first device, and associating the license information with a user identifier, the license information reflecting current state information of the license when the first device reports the license information the last time;
a second device requests the server to restore a license;
validating, by the server, a user identifier of the second device and the user identifier associated with the license information , and upon determination that the two user identifiers are identical, generating a license according to the license information backed up, and transmitting the license to the second device.

2. The method according to claim 1, wherein the license information reported by the first device to the server comprises a license identifier.

3. The method according to claim 1, wherein the first device reports state information of the license to the server, and the server updates state information in the license information backed up locally according to the state information reported by the first device.

4. The method according to claim 1, wherein the first device requests the server to back up the license, and transmits updated current state information to the server; or the first device requests the server to back up the license, and transmits original rights information and current state information to the server, and the server updates the license information backed up.

5. The method according to claim 4, wherein after successfully backing up the license information, the server transmits to the first device a response message indicating that the license information is successfully backed up, a validity period of the license backed up being contained in the response message.

6. The method according to claim 4, wherein the first device disables or deletes the local license before the second device can request restoration of the license.

7. The method according to claim 4, wherein the server deletes the license information backed up locally after transmitting the license backed up to the second device.

8. The method according to claim 1, wherein the second device initiatively requests the server to restore the license; or the server transmits a license restoration trigger or a license acquisition trigger to the second device, and the second device, according to the license restoration trigger or the license acquisition trigger, requests the server to restore or acquire the license.

9. The method according to claim 8, wherein the second device reports a device certificate when requesting the server to restore the license, and the server uses the public key in the device certificate to re-encapsulate the content key in the license.

10. The method according to any one of claims 1 to 9, wherein upon determination that the user identifier of the second device is consistent with the user identifier of the first device, the server sends a list of restorable licenses to the second device, the user chooses a license to be restored from the list, and informs the server of the chosen license via the second device, and the server transmits the license chosen by the user to the second device.

11. The method according to claim 10, wherein the second device is undetermined when the server backs up the license information.

12. The method according to claim 10, wherein the server is a rights issuer.

13. The method according to claim 10, wherein the user identifier is a SIM card, a Smartcard, or a username plus password.

14. A terminal device, comprising:
a module adapted to acquire license information;
a module adapted to read a user identifier;
a module adapted to transmit the license information to a server, to request a server to restore a license, and to acquire a license from the server;
a module adapted to sign and to validate a signature during a communication.

15. A server, comprising:
a module adapted to back up license information and to associate the license information with a user identifier;
a module adapted to validate whether a user identifier of a requestor requesting restoration of a license is consistent with the user identifier associated with the license information;
a module adapted to generate a license based on the license information backed up after it is validated that the user identifiers are consistent with each other;
a module adapted to transmit the license to the requestor;
a module adapted to sign and to validate a signature during a communication.

16. The server according to claim 15, wherein the server is a rights issuer.

17. A license processing system, comprising a first device, a second device, and a server, wherein:
the first device is adapted to transmit license information to the server;
the second device is adapted to acquire from the server a license backed up;
the server is adapted to back up license information of the first device, and to associate the license information with a user identifier, the license information reflecting the current state information of a license when the first device reports the license information the last time; and the server is further adapted to, upon validation that a user identifier of the second device is consistent with the user identifier associated with the license information, generate the license based on the license information backed up, and transmit the license to the second device.

18. The system according to claim 17, wherein the server is a rights issuer.

19. The system according to claim 17, wherein the first device reports state information of the license to the server, and based on the state information, the server updates state information in the license information backed up locally.

20. The system according to claim 17, wherein the first device requests the server to back up the license, and transmits updated current state information to the server; or the first device requests the server to back up the license, and transmits original rights information and current state information to the server, and the server updates the license information backed up.

## Amended claims

### Amended claims under Art. 19.1 PCT

1. A method for backing up and restoring a license, comprising:
backing up, at a server, license information of a first device, and associating the license information with a user identifier, the license information reflecting current state information of the license when the first device reports the license information the last time;
validating, by the server, a user identifier of a second device and the user identifier associated with the license information when the license is requested to be restored, and upon determination that the two user identifiers are identical, generating a license according to the license information backed up, and transmitting the license to the second device.

2. The method according to claim 1, wherein the license information reported by the first device to the server comprises a license identifier.

3. The method according to claim 1, wherein the license information reported by the first device to the server comprises state information of the license, and the server updates state information in the license information backed up locally according to the state information reported by the first device.

4. The method according to claim 1, wherein the first device requests the server to back up the license, and transmits updated current state information to the server; or the first device requests the server to back up the license, and transmits original rights information and current state information to the server, and the server updates the license information backed up.

5. The method according to claim 4, wherein after successfully backing up the license information, the server transmits to the first device a response message indicating that the license information is successfully backed up, a validity period of the license backed up being contained in the response message.

6. The method according to claim 4, wherein the first device disables or deletes the local license before the second device can request restoration of the license.

7. The method according to claim 4, wherein the server deletes the license information backed up locally after transmitting the license backed up to the second device.

8. The method according to claim 1, wherein the second device initiatively requests the server to restore the license; or the server transmits a license restoration trigger or a license acquisition trigger to the second device, and the second device, according to the license restoration trigger or the license acquisition trigger, requests the server to restore or acquire the license.

9. The method according to claim 8, wherein the second device reports a device certificate when requesting the server to restore the license, and the server uses the public key in the device certificate to re-encapsulate the content key in the license.

10. The method according to any one of claims 1 to 9, wherein upon determination that the user identifier of the second device is consistent with the user identifier of the first device, the server displays a list of restorable licenses to a user, the user chooses a license to be restored from the list, and informs the server of the chosen license, and the server transmits the license chosen by the user to the second device.

11. The method according to claim 10, wherein the second device is undetermined when the server backs up the license information.

12. The method according to claim 10, wherein the server is a rights issuer.

13. The method according to claim 10, wherein the user identifier is a SIM card, a Smartcard, or a username plus password.

14. A terminal device, comprising:
a module adapted to acquire license information;
a module adapted to read a user identifier;
a module adapted to transmit the license information to a server, to request a server to restore a license, and to acquire a license from the server;
a module adapted to sign and to validate a signature during a communication.

15. A server, comprising:
a module adapted to back up license information and to associate the license information with a user identifier;
a module adapted to validate whether a user identifier of a requestor requesting restoration of a license is consistent with the user identifier associated with the license information;
a module adapted to generate a license based on the license information backed up after it is validated that the user identifiers are consistent with each other;
a module adapted to transmit the license to the requestor;
a module adapted to sign and to validate a signature during a communication.

16. The server according to claim 15, wherein the server is a rights issuer.

17. A license processing system, comprising a first device, a second device, and a server, wherein:
the first device is adapted to transmit license information to the server;
the second device is adapted to acquire from the server a license backed up;
the server is adapted to back up license information of the first device, and to associate the license information with a user identifier, the license information reflecting the current state information of a license when the first device reports the license information the last time; and the server is further adapted to, upon validation that a user identifier of the second device is consistent with the user identifier associated with the license information, generate the license based on the license information backed up, and transmit the license to the second device.

18. The system according to claim 17, wherein the server is a rights issuer.

19. The system according to claim 17, wherein the first device reports state information of the license to the server, and based on the state information, the server updates state information in the license information backed up locally.

20. The system according to claim 17, wherein the first device requests the server to back up the license, and transmits updated current state information to the server; or the first device requests the server to back up the license, and transmits original rights information and current state information to the server, and the server updates the license information backed up.
